# EUROPEAN PATENT APPLICATION

(11) **EP 3 967 905 A1**
(43) Date of publication of application: **16.03.2022**
(21) Application number: 20195835.2
(22) Date of filing: 11.09.2020
(51) Int. Cl.: F16J 15/3208, F03D 80/70, F16C 33/78, F16J 15/3232, F16J 15/324, F16J 15/3252

(54) **SEALING RING ARRANGEMENT, BEARING AND WIND TURBINE**

(71) Applicant: Siemens Gamesa Renewable Energy A/S, 7330 Brande (DK)
(72) Inventor: Petronic, Vujadin, 7330 Brande (DK); Poulsen, Soeren, 7500 Holstebro (DK)
(74) Representative: Aspacher, Karl-Georg

(57) **Abstract**

A sealing ring arrangement (18) for a main bearing (8) of a wind turbine (1), the main bearing (8) comprising an inner ring (10) and an outer ring (9) being configured to rotate relative to each other, and the sealing ring arrangement being configured to be fixed to one of the inner ring (10) and the outer ring (9) and to rotatably seal against the other one of the inner ring (10) and the outer ring (9),
wherein the sealing ring arrangement comprises:
a main sealing lip (28) for sealing off a lubrication space (17) of the main bearing (8), and
a pre-sealing lip (31) for providing a controlled leakage of lubricant (16, 16') to the main sealing lip (28), and

wherein both the main sealing lip (28) and the pre-sealing lip (31) are configured to rotatably seal against the other one of the inner ring (10) and the outer ring (9).

By having the pre-sealing lip, the amount of lubricant coming into contact with the main sealing lip is limited and the build-up of lubricant in front of the main sealing lip can be better avoided.

## Description

The present invention relates to a sealing ring arrangement for a main bearing of a wind turbine, a bearing comprising such a sealing ring arrangement and a wind turbine comprising such a bearing.

Bearings, such as a main bearing in a wind turbine, need to be lubricated. In order to prevent lubricant from escaping the bearing area containing the roller elements of the bearing, seals are applied. These kind of seals usually have a sealing lip rotatably sealing against a rotating part such as a rotating ring of the bearing or a rotating shaft supported by the bearing. Furthermore, in order to prevent dust and moisture from entering the bearing area from outside, an additional dust seal may be applied.

However, it may occur that lubricant builds up in front of the sealing lip. The built-up lubricant can stick to the sealing lip and to surrounding parts in the sealing area. The lubricant built-up in front of the sealing lip may also fill a sealing cavity and may stick to a garter spring in the cavity. Consequently, the sealing performance of the sealing lip may be deteriorated due to adhesive forces from the lubricant. Further, a free movement and deflection of the sealing lip may be prevented. Thus, the sealing capability of the seal may be significantly reduced. Further, lubricant may leak from the bearing and the lubrication of the bearing is deteriorated.

It is one object of the present invention to provide an improved sealing ring arrangement for a main bearing of a wind turbine, a bearing comprising such a sealing ring arrangement and a wind turbine comprising such a bearing.

Accordingly, a sealing ring arrangement for a main bearing of a wind turbine is provided. The main bearing comprises an inner ring and an outer ring being configured to rotate relative to each other, and the sealing ring arrangement is configured to be fixed to one of the inner ring and the outer ring and to rotatably seal against the other one of the inner ring and the outer ring. Further, the sealing ring arrangement comprises a main sealing lip for sealing off a lubrication space of the main bearing, and a pre-sealing lip for providing a controlled leakage of lubricant to the main sealing lip. Thereby, both the main sealing lip and the pre-sealing lip are configured to rotatably seal against the other one of the inner ring and the outer ring.

By having the pre-sealing lip, the amount of lubricant coming into contact with the main sealing lip is limited and the build-up of lubricant in front of the main sealing lip can be reduced or avoided. Therefore, a free movement and deflection of the main sealing lip is ensured and a pressure on the main sealing lip caused by the lubricant is reduced. Thus, the sealing capability of the main sealing lip and the sealing ring arrangement is improved. Hence, a leakage of lubricant out of the lubrication space of the bearing is better prevented. This improves the lubrication of the bearing, ensures smooth operation of the bearing and extends its durability and lifetime.

Furthermore, as the pre-sealing lip allows a controlled leakage of lubricant towards the main sealing lip, a sufficient lubrication of the main sealing lip is provided without the need for additional lubrication means to lubricate the space between the main sealing lip and the pre-sealing lip. Appropriate lubrication of the main sealing lip is required as it slides along a surface of the other one of the inner and outer ring of the main bearing.

In particular, for bearings having a large diameter the issue of a build-up of lubricant in front of a sealing lip is enhanced and, thus, having the pre-sealing lip is of particular advantage. A diameter of the bearing is, for example, larger than 2 meters, larger than 3 meters and/or larger than 4 meters.

The sealing ring arrangement is configured to be applied to a main bearing of a wind turbine. A wind turbine is an apparatus to convert the wind's kinetic energy into electrical energy. The wind turbine comprises, for example, a rotor having one or more blades, with each of the blades being connected to a hub of the wind turbine. The rotor hub is supported by at least one bearing (main bearing) of the wind turbine rotatably around a rotation axis of the rotor. In particular, the rotor hub is connected to a rotating part of the bearing, while a stationary part of the bearing is connected to a bed plate/a tower of the wind turbine to transfer loads received from the rotating part to the bed plate/tower. Further, the rotating part of the bearing is connecting the hub (e.g., via a main shaft or without; via a gear box or gearless) to a generator arranged inside a nacelle. The wind turbine further comprises the tower holding, at its top end, the nacelle. The tower of the wind turbine may be connected via a transition piece to a foundation of the wind turbine, such as a monopile in the seabed.

For example, the rotor hub is supported by the bearing via a rotating main shaft connected to the hub and to the rotating part of the bearing (e.g., an inner ring of the bearing). Alternatively, the rotor hub is supported by the bearing by being directly connected to the rotating part of the bearing (e.g., an outer ring of the bearing). In the first case, the rotating main shaft connects the hub (via a gear box or gearless) to the generator. Further, in the first case, the bearing is supporting the rotating main shaft rotatably around a shaft axis, the outer ring of the bearing is stationary and is connected to a bearing housing or is part of a bearing housing, and the bearing housing is mounted to a bed plate of the wind turbine. In the second case, the rotating outer ring of the bearing connects the hub (e.g., directly, i.e. gearless) to the generator. Further, in the second case, the bearing is supporting the rotating hub rotatably around a stationary axis element of the wind turbine fixed at the bed plate and/or the tower.

In both cases, the connection between the rotor and the generator may be via a gear box (geared drive train, geared wind turbine) or direct, i.e. gearless (direct drive train, direct drive wind turbine).

In a preferred embodiment, the at least one sealing ring arrangement is fixed to the outer ring of the bearing and is configured to rotatably seal against the inner ring. Further, in a preferred embodiment, the outer ring is fixed to the rotor hub and is rotating and the inner ring is stationary and is transmitting the loads via a stationary axis element to the tower. Thus, both the main sealing lip and the pre-sealing lip are rotating together with the outer ring of the bearing and rotatably seal against the stationary inner ring. Further, in a preferred embodiment, the outer ring is directly (i.e. gearless) connected to a generator of the wind turbine.

The bearing comprises several roller elements arranged rotatably between inner and outer races (running surfaces) of the inner and outer rings of the bearing, respectively. During operation of the wind turbine, the rotation of the rotor causes one of the inner and outer ring to rotate and, hence, causes each roller element to rotate around its rotation axis. Thus, the rotating roller elements run along both the inner and outer races (running surfaces) during the operation of the wind turbine.

The roller elements are, for example, balls, cylindrical rollers, spherical rollers, tapered rollers (truncated cone shape) and/or needle rollers. The bearing may also comprise one or more row(s) of rollers, e.g., two rows of rollers.

The lubricant comprises, for example, grease and/or oil. Grease comprises, in particular, a mixture of oil and soap. The lubricant comprises, for example, very soft and/or semi-fluid grease. The lubricant comprises, for example, grease with an NLGI (National Lubricating Grease Institute) number of 0 (very soft) or 00 (semi-fluid). However, the lubricant may, for example, also comprise grease with another NLGI number.

The bearing comprises, for example two sealing ring arrangements sealing the bearing, i.e. the lubrication space of the bearing, at both sides of the roller elements.

During operation of the wind turbine, the lubricant flows within the lubrication space due to the rotation (e.g., centrifugal force) of the roller elements as they run along the inner and outer races and rotate around their rotation axis.

The main sealing lip and the pre-sealing lip are sliding along a surface of the other one of the inner and outer ring. This may include examples in which the main sealing lip and the pre-sealing lip are rotating and the other one of the inner and outer ring is stationary as well as examples in which the main sealing lip and the pre-sealing lip are stationary and the other one of the inner and outer ring is rotating.

The main sealing lip and/or the pre-sealing lip comprise, for example, an elastic material, rubber, nitrile rubber, acrylonitrile butadiene rubber (NBR), hydrogenated nitrile butadiene rubber (HNBR) and/or Polytetrafluorethylen (Teflon). Using Polytetrafluorethylen, in particular at a sealing edge of the respective sealing lip, provides a better heat resistance.

The main sealing lip and the pre-sealing lip are configured to provide a sealing in radial direction. In particular, the main sealing lip and the pre-sealing lip are biased in radial direction towards the other one of the inner and outer ring. In particular, a sealing edge of each of the main sealing lip and the pre-sealing lip is pressed against the other one of the inner and outer ring.

In embodiments, the sealing ring arrangement comprises an additional biasing element for biasing the main sealing lip towards the other one of the inner and outer ring. The biasing element is, for example, a garter spring. The biasing element provides additional radial force towards the other one of the inner and outer ring. Hence, the biasing element improves the sealing capability of the main sealing lip.

By having the pre-sealing lip, the amount of lubricant coming into contact with the biasing element is limited. Thus, a deterioration of the functionality of the biasing element due to lubricant at and around the biasing element is better avoided.

In the case of the sealing ring arrangement rotatably sealing against the inner ring of the bearing, the biasing element is, for example, arranged radially outwards of the main sealing lip and configured to increase a radial force towards the inner ring of the main bearing.

In the case of the sealing ring arrangement rotatably sealing against the outer ring of the main bearing, the biasing element is, for example, arranged radially inwards of the main sealing lip and configured to increase a radial force towards the outer ring of the main bearing.

According to an embodiment, the main sealing lip is configured to allow no leakage of lubricant and/or less leakage of lubricant than the pre-sealing lip.

According to a further embodiment, the main sealing lip is configured to apply a greater radial force to the other one of the inner ring and the outer ring of the main bearing compared to the radial force configured to be applied by the pre-sealing lip.

The radial force (contact force) of the sealing lips depends on the elasticity of the used material and the amount of pre-tensioning towards the other one of the inner and outer ring.

According to a further embodiment, in a state in which the sealing ring arrangement is not fitted between the inner and outer ring of the main bearing, an inner diameter of the sealing ring arrangement at the main sealing lip is smaller than an inner diameter of the sealing ring arrangement at the pre-sealing lip.

Thus, in a state in which the sealing ring arrangement is fitted between the inner and outer ring of the main bearing, an amount of pre-tensioning of the main sealing lip is larger than an amount of pre-tensioning of the pre-sealing lip.

According to a further embodiment, the pre-sealing lip is pointing away from the main sealing lip and/or is configured to form an acute angle with the other one of the inner and outer ring of the main bearing, a point of the acute angle pointing away from the main sealing lip.

This is in particular the case in a state in which the sealing ring arrangement is fitted between the inner and outer ring of the main bearing.

Having the pre-sealing lip and/or the point of the corresponding acute angle pointing away from the main sealing lip - i.e. in the direction towards the (interior of the) lubrication space of the bearing - the pre-sealing lip can be better limit the amount of lubricant reaching the main sealing lip.

The acute angle between the pre-sealing lip and the other one of the inner and outer ring of the main bearing is, in particular, an acute angle between the pre-sealing lip and a surface of the other one of the inner and outer ring.

According to a further embodiment, the pre-sealing lip comprises a scraper configured for scraping the lubricant from the other one of the inner ring and the outer ring of the main bearing.

Having the scraper, the pre-sealing lip can scrape off (wipe off) a greater amount of lubricant and, thus, better prevent a build-up of lubricant in front of the main sealing lip.

According to a further embodiment, the pre-sealing lip comprises through-holes for providing the controlled leakage of the lubricant to the main sealing lip through the through-holes.

Having the through-holes the amount of leakage of the pre-sealing lip can be better controlled, e.g. by choosing a diameter and/or a number of the through-holes.

According to a further embodiment, the main sealing lip is pointing towards the pre-sealing lip and/or is configured to form an acute angle with the other one of the inner and outer ring of the main bearing, a point of the acute angle pointing towards the pre-sealing lip.

This is, in particular, the case in a state in which the sealing ring arrangement is fitted between the inner and outer ring of the main bearing.

Having the main sealing lip and/or the corresponding acute angle pointing towards the pre-sealing lip - i.e. in the direction towards the (interior of the) lubrication space of the bearing - a lifting off of the main sealing lip from the other one of the inner and outer ring can be better avoided. Thus, sealing performance of the main sealing lip is improved.

According to a further embodiment, the sealing ring arrangement comprises a contamination sealing lip for preventing the ingress of contaminants towards the main sealing lip, wherein the contamination sealing lip:
is arranged, with respect to the pre-sealing lip, at the opposite side of the main sealing lip, and
is configured to rotatably seal against the other one of the inner ring and the outer ring of the main bearing.

In particular, the contamination sealing lip is configured to prevent dust, abrasives, corrosive, moisture and other harmful contaminants from coming into contact with the main sealing lip and from entering the lubrication space of the bearing containing the roller elements. Further, an intermixture of two different mediums, such as lubricating oil and water, in the lubrication space is prevented.

According to a further embodiment, the contamination sealing lip is pointing away from the main sealing lip and/or is configured to form an acute angle with the other one of the inner and outer ring of the main bearing, a point of the acute angle pointing away from the main sealing lip.

Having the contamination sealing lip and/or the corresponding acute angle pointing away from the lubrication space of the bearing, allows to better prevent contaminants from coming into contact with the main sealing lip and from entering the lubrication space.

According to a further embodiment, the sealing ring arrangement comprises:
a seal carrier configured to be fixed to the one of the inner and outer ring of the main bearing, the seal carrier comprising a seat, and
one or more sealing members seated in the seat of the seal carrier, the one or more sealing members comprising the main sealing lip, the pre-sealing lip and/or the contamination sealing lip.

In particular, the one or more sealing members having the main sealing lip and the pre-sealing lip (and in embodiments also the contamination sealing lip) are pressed and/or clamped into the seat of the seal carrier, thereby stationary sealing against the seal carrier.

The seal carrier is, for example, bolted to the one of the inner and outer ring of the bearing.

The seal carrier comprises, for example, metal.

The seat is, in particular, an annular seat. The seat is, for example, an annular groove.

The sealing ring arrangement comprises, for example, a detachable seal cover and the seat is an annular groove formed between a recess of the seal carrier and the seal cover.

According to a second aspect, a bearing for a wind turbine is provided. The bearing is configured to support a rotor hub of the wind turbine rotatably around a rotation axis of the rotor. The bearing comprises:
an inner ring having at least one inner race,
an outer ring having at least one outer race,
several roller elements configured to run along the inner and outer races during rotation of the hub and during rotation of the inner and outer rings relative to each other, and
at least one sealing ring arrangement as described above, wherein:
   the at least one sealing ring arrangement is fixed to one of the inner and outer ring and is configured to rotatably seal against the other one of the inner and outer ring, and
   both the main sealing lip and the pre-sealing lip of the at least one sealing ring arrangement are configured to rotatably seal against the other one of the inner and outer ring.

According to a third aspect, a wind turbine is provided. The wind turbine comprises a rotor with a hub and at least one bearing as described above.

According to an embodiment of the third aspect, the outer ring of the at least one bearing is fixed to the rotor hub of the wind turbine, and the inner ring of the at least one bearing is fixed to a stationary axis element of the wind turbine, the stationary axis element being fixed to a bed plate and/or tower of the wind turbine.

The bed plate is, for example, a floor of the nacelle or a portion of the floor of the nacelle. The bed plate is connected to the tower of the wind turbine to transmit loads received, for example from the bearing, to the tower. The bed plat may be connected to the tower of the wind turbine by means of a yaw bearing to orient the rotor into the wind.

According to an embodiment of the third aspect, the wind turbine comprises a gearless direct drive train.

The drive train of the wind turbine comprises, in particular, all components (rotor, bearing, main shaft, gear box, coupling and/or generator) involved in transmitting the power from the rotor to the generator. The drive train includes, in particular, the main bearing having the sealing ring arrangement. In a gearless direct drive train, no gear box is imposed between the rotor and the generator.

The embodiments and features described with reference to the sealing ring arrangement of the present invention apply mutatis mutandis to the bearing and the wind turbine of the present invention.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: shows a perspective view of a wind turbine according to an embodiment;
- Fig. 2: shows a cross-section view of a main bearing of the wind turbine of Fig. 1 according to an embodiment, the main bearing supporting a rotor hub of the wind turbine rotationally;
- Fig. 3: shows the bearing of Fig. 2 partially in a perspective view and partially in a cross-section view, according to an embodiment;
- Fig. 4: shows an enlarged view of a region IV of Fig. 3 in cross-section illustrating a sealing ring arrangement of the bearing according to an embodiment;
- Fig. 5: shows sealing members of the sealing ring arrangement of Fig. 4;
- Fig. 6: shows a view similar as Fig. 5 but with the sealing members being in a relaxed state in which they are not fitted in the bearing of Fig. 2;
- Fig. 7: shows a view similar as Fig. 4 but illustrating a further embodiment of the sealing ring arrangement; and
- Fig. 8: shows a view similar as Fig. 4 but illustrating another further embodiment of the sealing ring arrangement.

In the Figures, like reference numerals designate like or functionally equivalent elements, unless otherwise indicated.

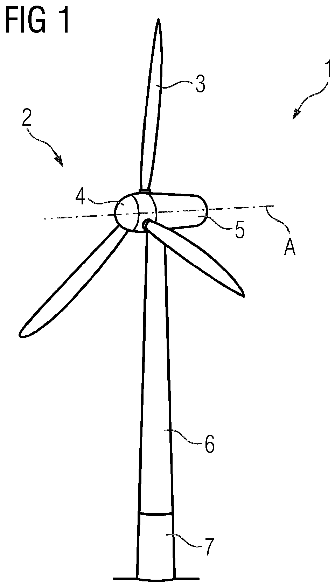

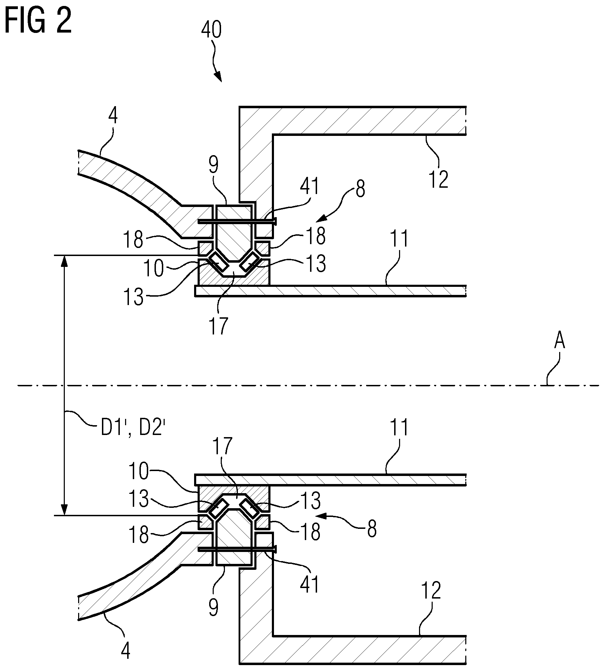

Fig. 1 shows a wind turbine 1 according to an embodiment. The wind turbine 1 comprises a rotor 2 having one or more blades 3 connected to a hub 4. The hub 4 is connected to a generator (not shown in Fig. 1; reference sign 12 in Fig. 2) arranged inside a nacelle 5. During operation of the wind turbine 1, the blades 3 are driven by wind to rotate and the wind's kinetic energy is converted into electrical energy by the generator 12 in the nacelle 5. The nacelle 5 is arranged at the upper end of a tower 6 of the wind turbine 1. The tower 6 is erected on a foundation 7 such as a monopile driven into the ground or seabed.

The rotor 2, in particular the rotor hub 4, is rotatably supported by at least one main bearing 8 (Fig. 2). The bearing 8 is supporting the rotor hub 4 rotatably around a rotation axis A of the rotor 2. As shown in Fig. 2, the rotor hub 4 is connected (e.g., bolted by means of bolts 41) to a rotating part 9 of the bearing 8. In the shown example, the rotating part 9 of the bearing 8 is an outer ring 9 of the bearing 8. In another example (not shown), the hub 4 may be connected via a main shaft to an inner ring 10 of the bearing.

As shown in Fig. 2, the inner ring 10 of the bearing 8 (which is in this example the stationary part of the bearing 8) is connected (e.g., bolted) to a stationary axis element 11. The axis element 11 is mounted directly or via a bed plate (not shown) to the tower 6 (Fig. 1) to transmits loads received from the bearing 8 to the tower 6.

The rotating part 9 of the bearing (in this example the outer ring 9) transmits the rotational energy from the rotor 2 (rotor hub 4) to the generator 12. The example shown in Fig. 2 illustrates a gearless direct drive train 40 in which no gear box is provided between the hub 4 and the generator 12 but instead the outer ring 9 of the bearing 8 is directly connected to the generator 12 (rotating part of the generator 12). In another example (not shown), the wind turbine 1 may also be a geared wind turbine having a gear box arranged between the hub 4 and the generator 12.

In the example of Fig. 2, the generator 12, i.e. the stationary part of the generator 12 (not shown), may also be supported by the axis element 11.

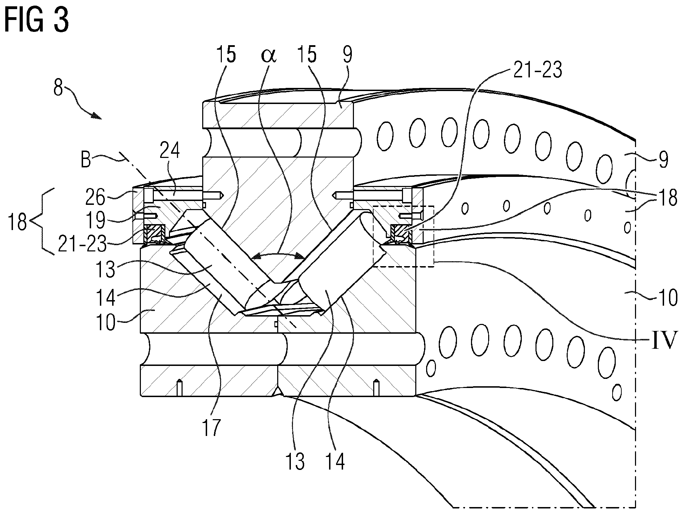

As best visible in Fig. 3, the bearing 8 comprises several roller elements 13 arranged rotatably between an inner race 14 (running surface of the inner ring 10) and an outer race 15 (running surface of the outer ring 9). During operation of the wind turbine 1, the rotation of the rotor 3 causes one of the inner ring 10 and outer ring 9 to rotate (in the shown example the outer ring 9) which in turn causes each roller element 13 to rotate around its rotation axis B and run along both the inner and outer races 14, 15.

In the shown example, the roller elements 13 are cylindrical rollers arranged in two rows inclined relative to each other by an angle α. In other examples also other types of roller elements such as balls, tapered rollers and needle rollers may be applied. Further, also other arrangements than the shown two rows may be applied such as one row or three or more rows and/or a different inclination angle α.

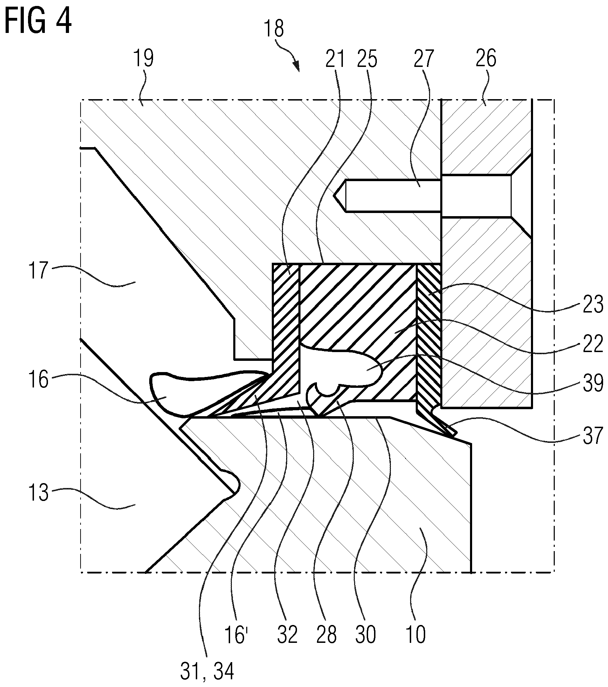

For a smooth operation and a long lifetime of the bearing 8, a proper lubrication of the bearing 8, in particular at the contact faces between the roller elements 13 and the inner and outer races 14, 15, is essential. Therefore, a lubricant 16, 16' (Fig. 4) such as grease is provided in a lubrication space 17 (Figs. 2 to 4) of the bearing 8.

In order to prevent the escape of the lubricant 16, 16' from the lubrication space 17, a sealing ring arrangement 18 (e.g., Fig. 3) is provided to seal off the lubrication space 17. In particular, two sealing ring arrangements 18 are provided at both sides of the rollers 13 of the bearing 8.

In the shown example (e.g., Fig. 3), each of the sealing ring arrangement 18 is fixed to the rotating outer ring 9 and, during operation of the wind turbine 1, rotatably seals against the stationary inner ring 10.

In other examples (not shown), at least one sealing ring arrangement may instead be fixed to a stationary outer ring and rotatably seal against a rotating inner ring 10, or may be fixed to a rotating inner ring and seal against a stationary outer ring 9, or may be fixed to a stationary inner ring and seal against a rotating outer ring 9. In the following, details will be described only with respect to the example shown in the figures (sealing ring arrangement 18 rotatably sealing against stationary inner ring 10), however, they apply, mutatis mutandis, also to the other examples listed above.

As shown in Figs. 3 and 4, each of the sealing ring arrangement 18 comprises a seal carrier 19 and one or more sealing members 21, 22, 23 made from a flexible material. The seal carrier 19 is fixed (e.g., bolted by means of bolts 24, Fig. 3) to the outer ring 9. The seal carrier 19 is configured to provide a seat 25 for the one or more sealing members 21, 22, 23. The seat 25 in the shown example (Fig. 4) is an annular groove 25. The annular groove 25 is formed between a recess of the seal carrier 19 and a detachable seal cover 26. The sealing members 21, 22, 23 are seated in the annular groove 25. In particular, the sealing members 21, 22, 23 are clamped into the annular groove 25 by the seal cover 26 being bolted by means of a bolt 27 to the seal carrier 19.

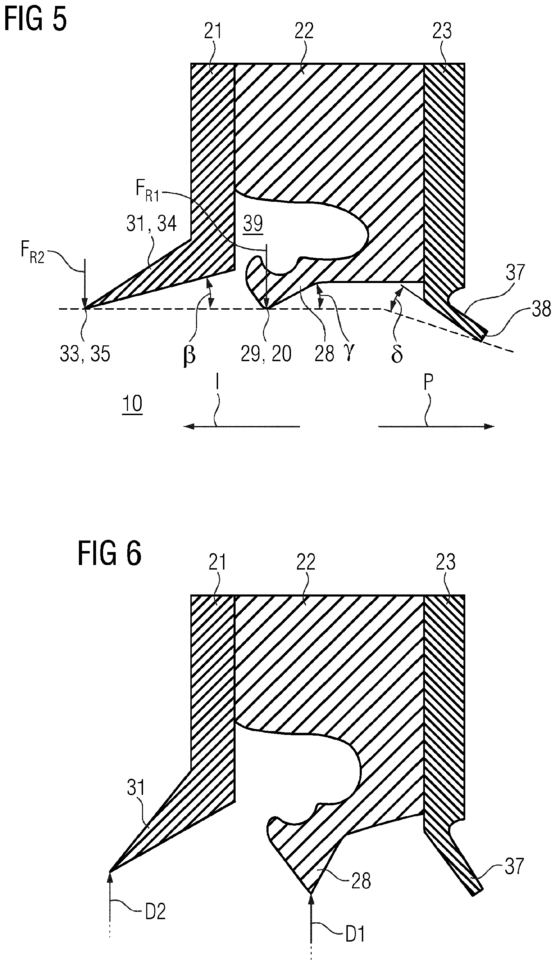

The one or more sealing members 21, 22, 23 (here the sealing member 22, Figs. 4) of each sealing ring arrangement 18 comprise a main sealing lip 28 for sealing off the lubrication space 17 of the main bearing 8. During operation of the wind turbine 1, the main sealing lip 28 is rotating together with the outer ring 9 and is rotatably sealing against the inner ring 10. In particular, a sealing edge 29 (Fig. 5) of the main sealing lip 28 is sliding along a surface 30 of the inner ring 10 during operation of the wind turbine 1. As the main sealing lip 28 is biased towards the inner ring 10, the main sealing lip 28 applies a radial force F_{R1} to the surface 30 of the inner ring 10, thereby sealing off the lubrication space 17.

As shown in Fig. 5, the main sealing lip 28 may point inwards in the direction I of the pre-sealing lip 31, i.e. towards the lubrication space 17. Further, the main sealing lip 28 may form an acute angle γ with the surface 30 of the inner ring 10, wherein a point 20 of the acute angle γ points in the direction I.

In order to prevent a build-up of lubricant 16 in front of the main sealing lip 27 during operation of the wind turbine 1 - which would deteriorate the sealing performance of the main sealing lip 27 - each of the sealing ring arrangements 18 (here the sealing member 21, Figs. 4) comprises a pre-sealing lip 31 for providing a controlled leakage of lubricant 16' to the main sealing lip 28 (Fig. 4). The pre-sealing lip 31 is also rotatably sealing against the inner ring 10. In particular, a sealing edge 33 (Fig. 5) of the pre-sealing lip 31 is sliding along the surface 30 of the inner ring 10 during operation of the wind turbine 1. As the pre-sealing lip 31 is also biased towards the inner ring 10, the pre-sealing lip 31 applies a radial force F_{R2} to the surface 30 of the inner ring 10 during operation of the wind turbine 1.

While the pre-sealing lip 31 is configured to allow a controlled leakage of lubricant 16, 16', the main sealing lip 28 is configured to allow no leakage of lubricant 16, 16' or at least less leakage of lubricant 16, 16' than the pre-sealing lip 31. This is, for example, achieved by that the radial force F_{R1} applied by the main sealing lip 28 to the surface 30 of the inner ring 10 is greater than the radial force F_{R2} applied by the pre-sealing lip 31 to the surface 30.

Fig. 5 shows an enlarged view of the sealing members 21, 22, 23 of the sealing ring arrangement 18 in a state in which the sealing ring arrangement 18 is fitted onto the inner ring 10. Fig. 6 shows a view similar as Fig. 5 but with the sealing ring arrangement 18 being in a relaxed state in which it is not fitted onto the inner ring 10. As can be seen in Fig. 6, in the unfitted state, an inner diameter D1 of the sealing ring arrangement 18 at the main sealing lip 28 is smaller than an inner diameter D2 of the sealing ring arrangement 18 at the pre-sealing lip 31 (cf. also Fig. 2 in which the respective diameters D1', D2' in the fitted state are roughly indicated). This results in a greater radial force F_{R1} applied by the main sealing lip 28 in the fitted state in comparison to the radial force F_{R2} applied by the pre-sealing lip 31 in the fitted state.

Having the pre-sealing lip 31 allowing a controlled leakage of lubricant 16, 16' prevents, on one hand, a build-up of lubricant 16, 16' in front of the main sealing lip 28. On the other hand, it allows sufficient lubricant 16' (Fig. 4) to pass the pre-sealing lip 31 into a space 32 between the pre-sealing lip 31 and the main sealing lip 28 such that the main sealing lip 28 is sufficiently lubricated to work properly.

In the embodiment of the pre-sealing lip 31 shown in Figs. 4 to 6, the pre-sealing lip 31 is pointing in the opposite direction I from the main sealing lip 28. Thus, the pre-sealing lip 31 is pointing inwards towards the lubrication space 17. Further, the pre-sealing lip 31 comprises a scraper 34 configured for scraping the lubricant 16, 16' from the inner ring 10. The scraper 34 has a pointed sealing edge 33 (Fig. 5). Further, the pre-sealing lip 31 forms an acute angle β with the surface 30 of the inner ring 10. A point 35 of the acute angle β points in the direction I away from the main sealing lip 28. During operation of the wind turbine 1, the rotating pre-sealing lip 31 is scraping the lubricant 16, 16' from the surface 30 (Fig. 4). In this way, the amount of lubricant 16' coming into contact with the main sealing lip 28 can be efficiently limited and controlled.

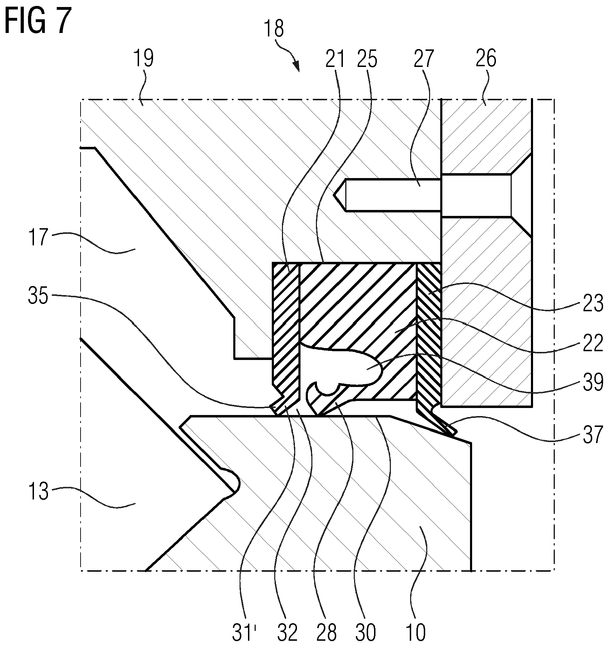

Fig. 7 shows a further embodiment of the pre-sealing lip 31'. In the embodiment of Fig. 7, the pre-sealing lip 31' is also pointing in the opposite direction I from the main sealing lip 28 but its tip 35 is less pointed and elongated than in the case of the pre-sealing lip 31 shown in Figs. 4 to 6.

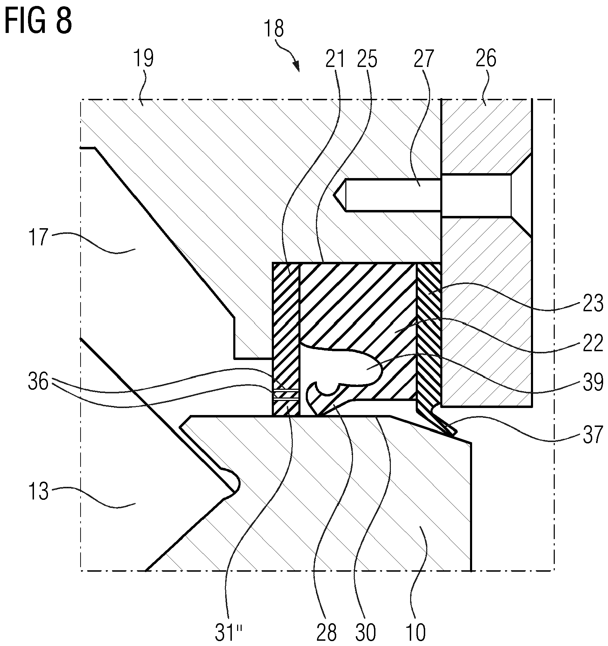

Fig. 8 shows a further embodiment of the pre-sealing lip 31". In the embodiment of Fig. 8, the pre-sealing lip 31" comprising through-holes 36 for providing the controlled leakage of the lubricant 16, 16' to the main sealing lip 28 through the through-holes 36. Although not shown in Fig. 8, the pre-sealing lip 31" having the through-holes 36 may in addition also point in the direction I away from the main sealing lip 28 and/or may comprise a scraper-like configuration 34 as shown in Fig. 4.

The sealing ring arrangement 18 may comprise - in addition to the main sealing lip 28 and the pre-sealing lip 31, 31', 31" -also a contamination sealing lip 37 (so-called dust lip), as shown in Figs. 4 to 8. The contamination sealing lip 37 is pointing outwards (direction P in Fig. 5) with respect to the lubrication space 17. It is configured for preventing the ingress of contaminants, such as dust, corrosion particles and moisture towards the main sealing lip 28. The contamination sealing lip 37 rotatably seals against the surface 30 of the inner ring 10. The contamination sealing lip 37 forms an acute angle δ with the surface 30 of the inner ring 10. A point 38 of the acute angle δ is pointing away from the main sealing lip 28 and from the lubrication space 17 (direction P) .

Although not shown, the sealing member 22 comprising the main sealing lip 28 may further comprise a garter spring arranged in a cavity 39 (Fig. 5) of the sealing member 22. By having the garter spring, the radial force F_{R1} applied by the main sealing lip 28 to the surface 30 of the inner ring 10 can be enhanced.

Although the present invention has been described in accordance with preferred embodiments, it is obvious for the person skilled in the art that modifications are possible in all embodiments.

## Claims

1. A sealing ring arrangement (18) for a main bearing (8) of a wind turbine (1), the main bearing (8) comprising an inner ring (10) and an outer ring (9) being configured to rotate relative to each other, and the sealing ring arrangement being configured to be fixed to one of the inner ring (10) and the outer ring (9) and to rotatably seal against the other one of the inner ring (10) and the outer ring (9),
wherein the sealing ring arrangement (18) comprises:
a main sealing lip (28) for sealing off a lubrication space (17) of the main bearing (8), and
a pre-sealing lip (31) for providing a controlled leakage of lubricant (16, 16') to the main sealing lip (28), and
wherein both the main sealing lip (28) and the pre-sealing lip (31) are configured to rotatably seal against the other one of the inner ring (10) and the outer ring (9).

2. The sealing ring arrangement according to claim 1, wherein the main sealing lip (28) is configured to allow no leakage of lubricant (16, 16') and/or less leakage of lubricant (16, 16') than the pre-sealing lip (31).

3. The sealing ring arrangement according to claim 1 or 2, wherein the main sealing lip (28) is configured to apply a greater radial force (F_{R1}) to the other one of the inner ring (10) and the outer ring (9) of the main bearing (8) compared to the radial force (F_{R2}) configured to be applied by the pre-sealing lip (31).

4. The sealing ring arrangement according to one of claims 1 - 3, wherein, in a state in which the sealing ring arrangement is not fitted between the inner and outer ring (10, 9) of the main bearing (8), an inner diameter (D1) of the sealing ring arrangement (18) at the main sealing lip (28) is smaller than an inner diameter (D2) of the sealing ring arrangement at the pre-sealing lip (31).

5. The sealing ring arrangement according to one of claims 1 -4, wherein the pre-sealing lip (31) is pointing away from the main sealing lip (28) and/or is configured to form an acute angle (β) with the other one of the inner and outer ring (10, 9) of the main bearing (8), a point (35) of the acute angle (β) pointing away from the main sealing lip (28).

6. The sealing ring arrangement according to one of claims 1 - 5, wherein the pre-sealing lip (31) comprises a scraper (34) configured for scraping the lubricant (16) from the other one of the inner ring (10) and the outer ring (9) of the main bearing (8).

7. The sealing ring arrangement according to one of claims 1 - 6, wherein the pre-sealing lip (31") comprises through-holes (36) for providing the controlled leakage of the lubricant (16, 16') to the main sealing lip (28) through the through-holes (36).

8. The sealing ring arrangement according to one of claims 1 - 7, wherein the main sealing lip (28) is pointing towards the pre-sealing lip (31) and/or is configured to form an acute angle (γ) with the other one of the inner and outer ring (10, 9) of the main bearing (8), a point (20) of the acute angle (γ) pointing towards the pre-sealing lip (31).

9. The sealing ring arrangement according to one of claims 1 - 8, comprising a contamination sealing lip (37) for preventing the ingress of contaminants towards the main sealing lip (28), wherein the contamination sealing lip (37):
is arranged, with respect to the pre-sealing lip (31), at the opposite side of the main sealing lip (28), and
is configured to rotatably seal against the other one of the inner ring (10) and the outer ring (9) of the main bearing (8).

10. The sealing ring arrangement according to claim 9, wherein the contamination sealing lip (37) is pointing away from the main sealing lip (28) and/or is configured to form an acute angle (δ) with the other one of the inner and outer ring (10, 9) of the main bearing (8), a point (38) of the acute angle (δ) pointing away from the main sealing lip (28).

11. The sealing ring arrangement according to one of claims 1 - 10, comprising:
a seal carrier (19) configured to be fixed to the one of the inner and outer ring (10, 9) of the main bearing (8), the seal carrier (19) comprising a seat (25), and
one or more sealing members (21, 22, 23) seated in the seat (25) of the seal carrier (19), the one or more sealing members (21, 22, 23) comprising the main sealing lip (28), the pre-sealing lip (31) and/or the contamination sealing lip (37) .

12. A bearing (8) for a wind turbine (1), the bearing being configured to support a rotor hub (4) of the wind turbine (1) rotatably around a rotation axis (A) of the rotor (2), comprising:
an inner ring (10) having at least one inner race (14),
an outer ring (9) having at least one outer race (15),
several roller elements (13) configured to run along the inner and outer races (14, 15) during rotation of the hub (4) and during rotation of the inner and outer rings (10, 9) relative to each other, and
at least one sealing ring arrangement (18) according to one of claims 1 - 11, wherein:
the at least one sealing ring arrangement (18) is fixed to one of the inner and outer ring (10, 9) and is configured to rotatably seal against the other one of the inner and outer ring (10, 9), and
both the main sealing lip (28) and the pre-sealing lip (31) of the at least one sealing ring arrangement (18) are configured to rotatably seal against the other one of the inner and outer ring (10, 9).

13. A wind turbine (1), comprising a rotor (2) with a hub (4) and at least one bearing (8) according to claim 12.

14. The wind turbine according to claim 13, wherein the outer ring (9) of the at least one bearing (8) is fixed to the rotor hub (4) of the wind turbine, and the inner ring (10) of the at least one bearing (8) is fixed to a stationary axis element (11) of the wind turbine, the stationary axis element (11) being fixed to a bed plate and/or tower (6) of the wind turbine.

15. The wind turbine according to claim 13 or 14, comprising a gearless direct drive train (40).
